Europäisches Patentamt

European Patent Office

Office européen des brevets

(11) Numéro de publication: **0 143 048**
**B1**

# (12) FASCICULE DE BREVET EUROPEEN

(45) Date de publication du fascicule du brevet: **18.05.88**

(51) Int. Cl.⁴: **H 02 M 3/335**

(21) Numéro de dépôt: **84402305.1**

(22) Date de dépôt: **13.11.84**

(54) Convertisseur continu-continu à inductance de charge commutée.

(30) Priorité: **18.11.83 FR 8318398**

(43) Date de publication de la demande:
**29.05.85 Bulletin 85/22**

(45) Mention de la délivrance du brevet:
**18.05.88 Bulletin 88/20**

(84) Etats contractants désignés:
**DE GB IT NL**

(56) Documents cités:
**EP-A-0 049 361**
**WO-A-83/00590**
**DE-A-3 121 638**
**GB-A-2 041 669**
**US-A-3 628 047**
**US-A-4 389 702**

(73) Titulaire: **THOMSON-CSF**
**173, Boulevard Haussmann**
**F-75379 Paris Cédex 08 (FR)**

(72) Inventeur: **Rambert, Bernard**
**THOMSON-CSF SCPI 173, bld Haussmann**
**F-75379 Paris Cedex 08 (FR)**

(74) Mandataire: **Benoit, Monique et al**
**THOMSON-CSF SCPI 19, avenue de Messine**
**F-75008 Paris (FR)**

Courier Press, Leamington Spa, England.

## Description

La présente invention concerne un convertisseur continu-continu du type comportant une inductance de charge qui est connectée en série avec un interrupteur électronique ayant un moyen de réglage de la durée du courant de charge.

Les convertisseurs continu-continu, ou convertisseurs C/C sont largement utilisés pour alimenter des circuits électroniques en énergie électrique. Sur ce sujet, on pourra consulter par exemple, l'ouvrage de E. R. Hnatek "Design of Solid-state Power Supplies" 1981, édité par Van Nostand.

Les convertisseurs C/C peuvent être classés selon leur mode de fonctionnement, lequel dépend principalement de la façon dont la charge utile est couplée à l'inductance. Dans un premier mode la charge utile est connectée en parallèle sur l'inductance de charge, de sorte que l'énergie magnétique emmagasinée dans cette inductance soit transférée a la charge utile uniquement pendant la période d'ouverture de l'élément de commutation. Dans un second mode la charge utile est connectée en série avec l'inductance de charge de sorte que le courant traverse cette inductance durant les périodes d'ouverture et de fermeture de l'élément de commutation.

Il se pose couramment le problème d'avoir à transférer à la charge utile une quantité d'énergie parfaitement déterminée, par exemple, dans les émetteurs radar à impulsions l'énergie de chacune des impulsions doit être parfaitement calibrée, en dépit des fluctuations de tension de la source primaire d'énergie et de l'intervalle de temps séparant des impulsions consécutives.

Si l'on considère, un convertisseur C/C opérant selon le premier mode, lequel est plus particulièrement connu sous la dénomination anglo-saxonne de convertisseur "Fly-Back" l'intensité du courant Ip traversant l'inductance $L_p$ de charge est donnée par la formule générale:

$$I_p(t) = \frac{Eo}{L_p} \cdot t$$

où Eo est la tension de la source continue d'entrée et $t$ la variable temps.

Il s'en suit que l'énergie magnétique maximale $W_{lm}$ emmagasinée dans l'inductance de charge à l'instant d'ouverture de l'élément de commutation est donnée par les relations suivantes:

$$W_{lm} = \frac{1}{2} \cdot L_p \cdot I_{pm}^2 = \frac{1}{2} \frac{Eo^2}{L_p} \cdot T_c^2$$

dans lesquelles Ipm est la grandeur du courant traversant, ou courant magnétisant, à l'instant de fermeture de l'élément de commutation, et T la durée de conduction de cet élément de commutation. Cette énergie $W_{lm}$ est transférée dans la charge, avec un coefficient de réduction fonction des pertes de transfert, mais dont il peut être tenu-compte. Généralement, la source continue d'entrée est obtenue à partir d'un réseau de puissance alternative dont la tension fluctue; il en résulte que l'énergie $W_{1m}$ emmagasinée dans l'inductance de charge varie également. Selon l'art antérieur, pour compenser les fluctuations de la source d'entrée et réguler le niveau de l'énergie transférée à la charge utile, on dispose une boucle d'asservissement entre la charge utile et un modulateur de durée afin de varier la durée de fermeture Tc de l'élément de commutation. Cette solution présente divers inconvénients, notamment, la vitesse de régulation est limitée par la fréquence de cycle du convertisseur et de plus le fonctionnement du convertisseur n'est pas totalement apériodique.

Par ailleurs il est connu du document GB—2 041 669 l'utilisation d'un circuit de lissage' en série avec un transistor de commutation dans un convertisseur de tension pour amortir le courant lors des commutations du transistor.

Cependant, lorsque l'on veut effectuer une mesure de la valeur instantanée $I_{pm}$ du courant $I_p$, la valeur du courant parasite $I'_p$ qui prend naissance à travers les éléments parasites $L_f$ et $C_p$ de l'enroulement du transformateur, doit être suffisamment atténuée.

La présente invention permet de remédier à cet inconvénient. Elle a pour objet un convertisseur continu-continu comprenant une inductance de charge connectée en série à un élément de commutation ayant une entrée de commande, comprenant des moyens de régulation de la valeur de l'énergie magnétique emmagasinée dans la self de charge, ces moyens de régulation comportant, connectés en série, un circuit de mesure du courant traversant l'élément de commutation, un comparateur de niveau, ayant sa seconde entrée reliée à une source de tension de référence et un circuit de commande lequel est connecté à l'entrée de commande de l'élément de commutation pour commander la durée de conduction de celui-ci, comprenant un circuit de lissage du courant traversant l'élément de commutation comportant une self de choc qui est disposée en série entre la self de charge et l'élément de commutation, et une diode qui est connectée en parallèle sur cette self de charge et cet élément de commutation; le circuit de mesure est inclus dans le circuit de roue libre de la diode afin d'atténuer dans le circuit de mesure les oscillations parasites causées par les éléments de fuite de la self de charge.

D'autres caractéristiques et avantages de ce convertisseur C/C apparaîtront dans la description détaillée qui va suivre, faite en regard de dessins annexés, sur ces dessins:

—la figure 1a est un bloc diagramme fonctionnel d'un convertisseur C/C classique.

—les figures 1b et 1c représentent les formes des principaux signaux électriques du convertisseur précédent.

—la figure 2a est un schéma électrique du circuit primaire du convertisseur, qui montre les éléments parasites de l'inductance de charge.

—la figure 2b montre la forme d'onde des courants traversant l'élément de commutation de l'inductance de charge.

—la figure 3a représente une forme de réalisation du convertisseur C/C.

—la figure 3b montre la forme d'onde des courants traversant l'élément de commutation et l'inductance de charge.

—la figure 4 est le schéma électrique d'un convertisseur C/C du type "Fly-back" sans transformateur.

—la figure 5 est le schéma électrique d'un convertisseur C/C du type "Forward".

—la figure 6 est le schéma électrique d'un convertisseur C/C du type "Boost".

—la figure 7 montre la forme d'onde des courants traversant l'élément de commutation et l'inductance de charge.

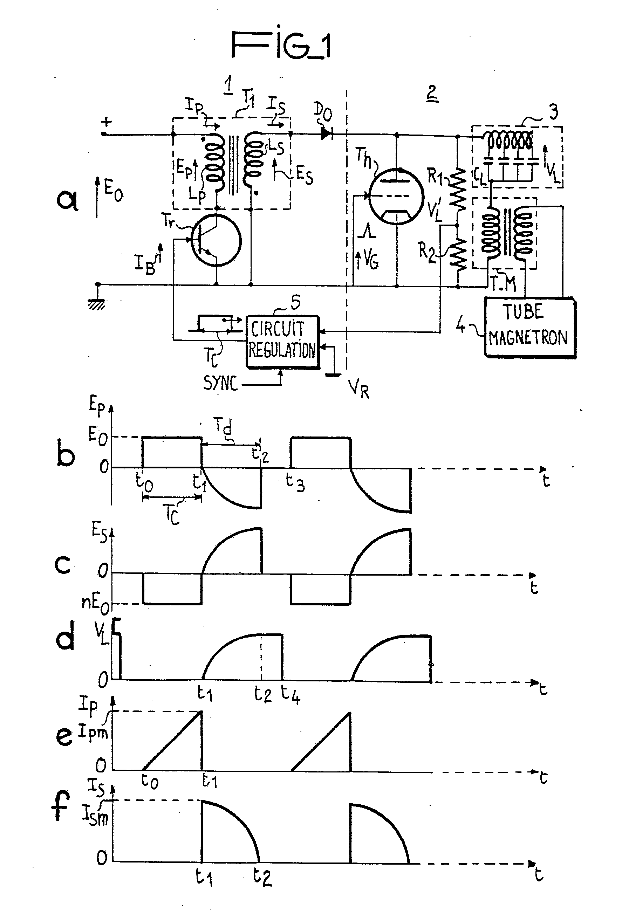

La figure 1a est le schéma électrique d'un émetteur microonde opérant en impulsions, dans lequel est inclus un convertisseur C/C *1* classique. La charge utile est constituée par un modulateur d'impulsions *2* qui comprend une ligne à retard *3* dont l'énergie emmagasinée est transférée à un tube magnétron *4* à travers un transformateur d'impulsion T·M, par l'intermédiaire d'un tube thyratron Th, lequel est déclenché cycliquement par des signaux en impulsions de commande $V_g$, de fréquence de récurrence $F_r$, appliquées sur sa grille de commande. Si l'on considère maintenant le convertisseur C/C *1*, on voit que le circuit de charge, ou circuit primaire, comprend, connectés en série, les éléments suivants: une self de charge $L_p$ et un transistor de commutation Tr, du type NPN; cet ensemble est alimenté par une source de tension continue $E_o$. Cette source de tension continue est obtenue à partir d'une source primaire de courant alternatif, dont la tension est susceptible de fluctuer entre des limites supérieure et inférieure déterminées. Le transistor de commutation Tr reçoit un courant de commande en créneau $I_B$, dont la durée Tc est ajustable pour permettre de modifier la grandeur du courant magnétisant Ip de l'inductance de charge Lp.

La grandeur de ce courant magnétisant Ip est donnée par la relation:

$$Ip(t) = \frac{Eo}{Lp} \cdot t$$

et l'énergie magnétisante maximale $W_{lm}$ dans l'inductance de charge Lp est donne par la formule:

$$W_{lm} = \frac{1}{2} \cdot Lp \cdot I_{pm}^2 = \frac{1}{2} \cdot \frac{E_o^2}{L_p} \cdot T_c^2$$

Le circuit de décharge, ou circuit secondaire, du convertisseur C/C, comprend connecté en série: l'inductance secondaire $L_s$, la diode de blocage $D_o$

et la capacité $C_L$ de la ligne à retard 3. La fréquence de résonnance Fs du circuit de décharge est donnée par la relation:

$$F_s = \frac{1}{2\pi(L_s \cdot C_L)^{1/2}}$$

Les inductances primaire $L_p$ et secondaire $L_s$ constituent les enroulements d'un transformateur, dont le rapport de transformation *n* est:

$$n = (L_s/L_p)^{1/2}$$

L'énergie $W_c$ emmagasinée dans la ligne à rétard 3 est égale à:

$$W_c = \frac{1}{2} C_L V_L^2$$

Pour réguler cette énergie $W_c$, laquelle dépend de la tension Eo de la source continue d'entrée, on maintient la valeur de la tension $V_L$ par une boucle d'asservissement. Cette boucle d'asservissement comprend un réseau résistif, constitué par les résistances $R_1$ et $R_2$, qui fournit une faible fraction $V'_L$ de la tension $V_L$; cette tension $V'_L$, est comparée à une tension de référence $V_R$ dans un circuit de régulation 5. La fonction de ce circuit de régulation est de moduler la durée $T_c$ du signal de commande $I_B$ du transistor de commutation Tr. Ce circuit de régulation peut également générer l'impulsion de commande $V_G$ du tube thyratron Th et plus généralement ce circuit de régulation 5 reçoit un signal extérieur de synchronisation (SYNC).

Les figures 1b à 1f, représentent la forme théorique des principaux signaux, pour un convertisseur C/C dans lequel les éléments parasites: dissipatifs, selfiques et capacitifs sont considérés comme négligeables. La figure 1B montre la forme du signal de tension $E_p$ aux bornes de l'inductance de charge $L_p$; l'intervalle de temps $(to-t_1)=T_c$ correspond à la durée de conduction du transistor de commutation Tr. Lors de la période de décharge $(t_1-t_2)$ le signal Ep est un arc de sinusoïde tel que:

$$\int_{t_o}^{t2} E_p(t) \cdot dt = o$$

La période de temps de décharge $t_d = (t_2-t_1)$ est donnée par la relation:

$$4t_d = \frac{\pi}{2}(Ls \cdot C_L)^{1/2} = \frac{1}{4Fs}$$

La figure 1c montre la forme du signal de tension $E_s$ aux bornes de l'inductance secondaire $L_s$, elle est identique à la forme du signal de tension $E_p$ puisque:

$$E_s(t) = n \cdot E_p(t)$$

3

La figure 1d montre la forme du signal de tension $V_L$ aux bornes de la ligne à retard, ce signal $V_L$ est constituée par un arc de sinusoïde de durée ($t_1 - t_2$) qui est complété par un palier de durée ($t_2 - t_4$) ou $t_4$ est l'instant de déclenchement du tube thyratron $T_h$.

La figure 1e montre la forme du courant magnétisant $I_p$ traversant l'inductance de charge $L_p$; ce courant de forme triangulaire a une durée $T_c$ égale à la durée de conduction du transistor de commutation Tr, et à l'instant d'ouverture de celui-ci sa valeur maximale est égale à Ipm.

Enfin, la figure 1f montre la forme du signal de courant Is traversant le circuit secondaire, sa valeur maximale Ism à l'instant $t_1$ est donnée par la relation:

$$Ism = Es \cdot (C_L/Ls)^{1/2}$$

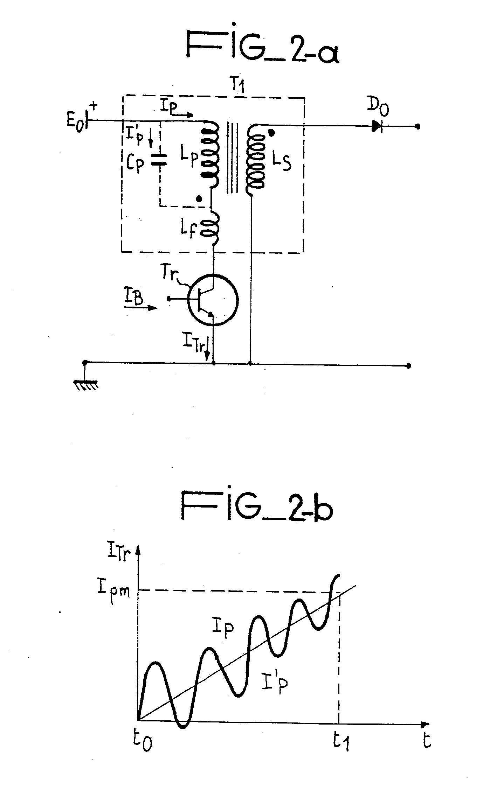

La figure 2a est le schéma électrique équivalent du circuit primaire du convertisseur (C/C dans lequel la self de fuite $L_f$ et la capacité parasite $c_p$ des enroulements du transformateurs $T_1$ sont indiquées. A l'instant $T_0$ de la fermeture du transistor Tr, il prend naissance un courant parasite oscillant $I'_p$ à travers les éléments parasites $L_f$ et Cp. Dans le transistor de commutation ce courant parasite $I'_p$ se superpose au courant magnétisant utile $I_p$, comme représente sur la figure 2b. Si l'on veut effectuer une mesure de la valeur Ipm du courant Ip à l'instant $t_1$, la valeur de ce courant parasite $I'_p$ doit être suffisamment atténuée. Au moment de la mise en conduction du transistor de commutation $T_r$, la valeur maximale du courant parasite $I'_p$ est donnée par la relation:

$$I'_p = Eo \cdot (C_p/L_f)^{1/2}$$

Pour obtenir un rendement élevé du convertisseur C/C la self de fuite $L_f$ doit être de faible valeur, d'où il en résulte une capacité parasite $C_p$ non négligeable. De plus, la résistance du circuit primaire doit être également de faible valeur et ainsi l'oscillation parasite ne peut s'amortir que très progressivement, compte-tenu du fait que le circuit secondaire, durant la conduction du transistor de commutation Tr, est en circuit ouvert, puisque la diode de blocage $D_o$ est polarisée en sens inverse.

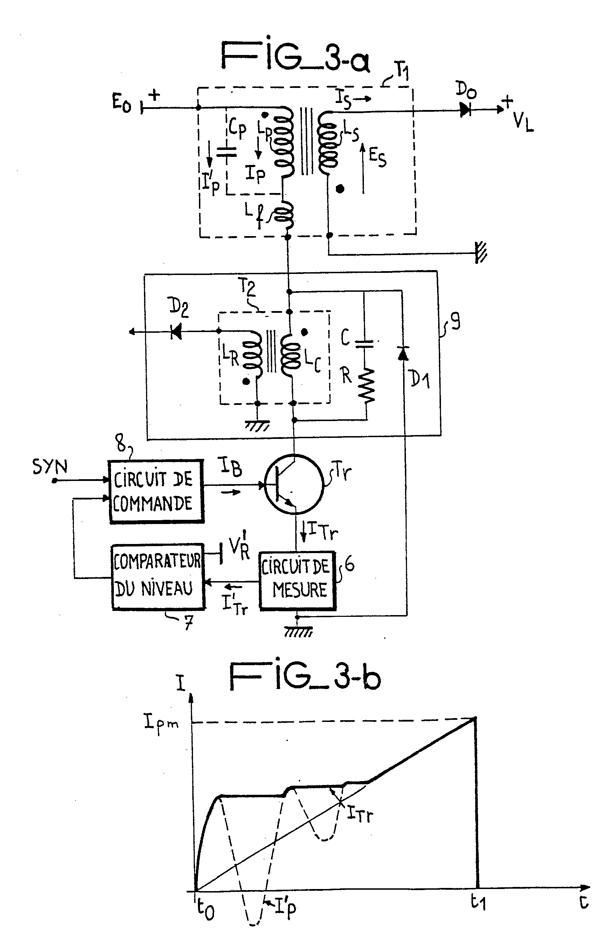

La figure 3a est un schéma électrique qui représente une forme de réalisation d'un convertisseur C/C conforme à l'invention.

Ce convertisseur C/C du type "Fly-back" comprend une inductance de charge $L_p$ qui est couplée à enroulement secondaire $L_s$ pour constituer un "transformateur" $T_1$. Le terme "transformateur" est utilisé ici, uniquement parce que l'inductance de charge et son enroulement secondaire ont l'apparence d'un transformateur. L'inductance de charge est connectée à un transistor de commutation Tr du type NPN, par l'intermédiaire d'un circuit de lissage 9 du courant Itr traversant ce transistor de commutation. Un circuit de mesure 6 permet de prélever un signal

$I'_{Tr}$ représentatif du courant $I_{Tr}$ du transistor de commutation. Ce signal de mesure $I'_{Tr}$ est appliqué à une première entrée d'un comparateur de niveau 7; la seconde entrée de ce comparateur étant connectée à une tension de référence $V'_R$ représentative de la valeur $I_{pm}$ du courant traversant l'inductance de charge. La sortie du comparateur de niveau est connectée à une première entrée d'un circuit de commande 8 du courant de base $I_B$ du transistor de commutation. La seconde entrée de ce circuit de commande reçoit un signal de synchronisation SYN permettant de commander la durée de conduction $T_c$ du transistor. L'instant de coupure du transistor Tr est déterminé par le signal de sortie fourni par le comparateur de niveau 7.

Le circuit de lissage du courant Itr traversant le transistor de commutation comprend une self de choc $L_c$ et une diode $D_1$; une des extrémités de cette diode est connectée au point de jonction de l'inductance de charge $L_p$ et de la self de choc $L_c$, l'autre extrémité étant connectée à la masse. Le sens de branchement de la diode $D_1$ est telle qu'un courant puisse traverser simultanément le transistor et la diode. Les fonctions de l'enroulement $L_R$ et du réseau R/C seront décrites ultérieurement, il suffit de noter que la diode $D_2$ connectée à l'enroulement $L_R$ étant polarisée en inverse, cet enroulement ne joue aucun rôle durant la période de conduction du transistor de commutation. La self de choc $L_c$ est en série avec la self de fuite $L_f$ de l'inductance de charge $L_p$ et son rôle est de limiter le courant d'appel $I'_p$, dû à la capacité parasite équivalente Cp de l'inductance de charge, l'amplitude de ce courant $I'_p$ est donnée par la relation suivante:

$$I'_p = Eo \cdot [Cp/(L_c + L_f)]^{1/2}$$

Ce courant d'appel $I'_p$ peut être maintenu à une valeur inférieure à la valeur $I_{pM}$ du courant traversant l'inductance de charge, si la valeur de la self de choc Lc est judicieusement choisie. Lorsque le courant d'appel de forme sensiblement sinusoïdale tend à décroître, la diode $D_1$ entre en conduction pour maintenir dans le transistor de commutation un courant de polarité positive et ce courant est égal au courant d'appel maximal. Par la suite, le courant dans la self de choc $L_c$ poursuit son oscillation dans le sens négatif, puis revient dans le sens positif. Au moment où ce courant d'appel atteint la valeur du courant en "roue libre" dans la self de choc, la diode $D_1$ se bloque à nouveau et la self de choc s'oppose au passage des oscillations. La répétition de ce phénomène sur chaque alternance positive contribue à l'amortissement complet des oscillations de courant. L'efficacité du circuit de lissage cesse dès que le courant ne présente plus de pentes négatives. Ici intervient le réseau résistance-capacité R/C qui est connecté en parallèle sur la self de choc $L_c$; le rôle de ce réseau R/C est d'amortir la transition entre le courant de palier et le courant de rampe. Les formes d'ondes du courant $I_{Tr}$ traversant le transistor de commutation et du courant oscillatoire $I'_p$ de l'inductance de charge sont illustrée à la figure 3b.

Si l'on se réfère à nouveau à la figure 3a, on voit que pendant la période de conduction du transistor de commutation la self de choc $L_c$ à emmagasinée une quantité d'énergie $W_{Lc}$ égale à:

$$W_{Lc} = \frac{1}{2} L_c I^2_{pm}$$

Cette énergie $W_{Lc}$ doit être dissipée et préférentiellement récupérée afin de ne pas dégrader le rendement du convertisseur. A cet effect, un enroulement $L_R$ est couplé à la self de choc $L_c$ pour constituer un "transformateur" ($T_2$). L'une des extrémités de cet enroulement $L_R$ est connectée à la masse et l'autre extrémité, par l'intermédiaire d'une diode $D_2$ est connectée à une charge utile. On notera, que cette énergie $W_{Lc}$ peut être renvoyée vers la source continue d'entrée.

Le fonctionnement du convertisseur C/C qui vient d'être décrit est apériodique, puisque l'énergie emmagasinée dans la self de charge $L_p$ est calibrée pour chacun des cycles de conduction du transistor de commutation. De plus, la régulation de l'énergie transférée à la charge utile est instantanée, puisque le convertisseur ne met pas en oeuvre une boucle d'asservissement de la tension de sortie aux bornes de la charge utile.

La forme de réalisation du circuit de lissage (9) qui a été décrit précédemment doit être adaptée en fonction du mode de fonctionnement du convertisseur continu-continu. Dans ce qui suite, on décrira des formes de réalisation du circuit de lissage du courant traversant l'élément de commutation pour différents modes de fonctionnement de convertisseur C/C.

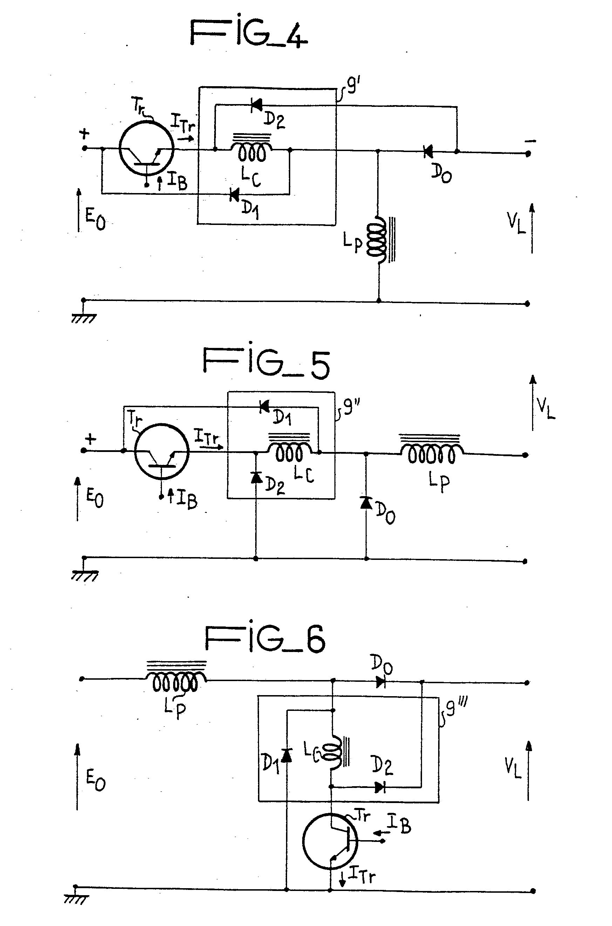

La figure 4 est un schéma électrique d'un convertisseur C/C du type "Fly-Back" sans transformateur, qui comprend un circuit de lissage 9' du courant $I_{Tr}$ traversant le transistor de commutation Tr. Dans cette configuration la tension de sortie $V_L$ est de signe opposé à la tension Eo de la source continue d'entrée. Lors de l'ouverture du transistor de commutation, l'énergie emmagasinée dans la self de choc $L_c$ est transférée à la sortie par l'action de la diode $D_2$.

La figure 5 est un schéma électrique d'un convertisseur C/C du type connu sous la dénomination "FORWARD" qui comprend également un circuit de lissage 9'' du courant $I_{Tr}$ traversant l'élément de commutation Tr. Dans cette configuration, la tension de sortie $V_L$ est toujours inférieure à la tension Eo de la source continue d'entrée. Lors de l'ouverture de l'élément de commutation, l'énergie emmagasinée dans la self de choc est transférée à la sortie par l'action de la diode $D_2$ dont la fonction est similaire à celle de la diode de blocage $D_o$, plus connue sous la dénomination de "diode de roue libre".

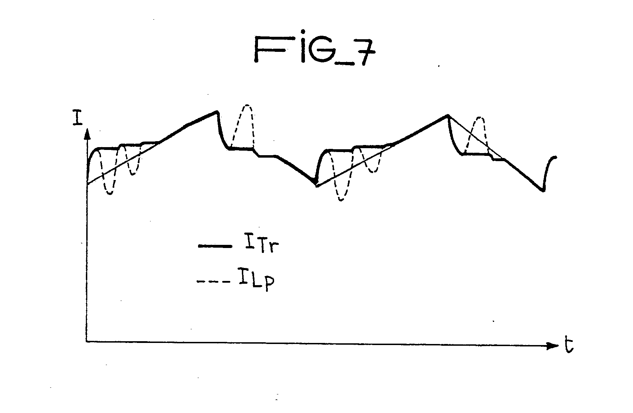

La figure 6 est un schéma électrique qui représente une autre forme de mise en oeuvre de l'invention, dans le cas d'un convertisseur du type connu sous la dénomination "BOOST". Dans ce type de convertisseur la tension de sortie $V_L$ est supérieure à la tension Eo de la source continue d'entrée. Le circuit de lissage 9''' du courant $I_{Tr}$ traversant l'élément de commutation comprend également une diode $D_2$ dont la fonction est de transférer l'énergie emmagasinée dans la self de choc $L_c$ vers la charge utile.

Pour ces différents types de convertisseurs C/C les formes d'ondes du courant $I_{Lp}$ traversant l'inductance de charge $L_p$ et du courant $I_{Tr}$ traversant l'élément de commutation $T_r$ sont montrées sur la figure 7. On voit ainsi, que le fonctionnement du circuit de lissage du courant traversant l'élément de commutation est identique à celui du convertisseur de la figure 3a et que ce circuit de lissage trouve son application lorsque l'on souhaite atténuer les oscillations résultant de la commutation rapide du courant traversant une inductance.

Un convertisser C/C conforme à l'invention est particulièrement adapté aux dispositifs opérant dans la gamme des puissances moyennes de l'ordre des centaines de watts. Il trouve ses applications dans l'alimentation électrique des circuits électroniques et notamment dans les modulateurs en impulsions des équipments radar ou laser.

**Revendications**

1. Convertisseur continu-continu comprenant une inductance de charge ($L_p$) connectée en série à un élément de commutation (Tr) ayant une entrée de commande, comprenant des moyens de régulation de la valeur de l'énergie magnétique ($W_{lm}$) emmagasinée dans la self de charge ($L_p$), ces moyens de régulation comportant, connectés en série, un circuit de mesure (6) du courant ($I_{Tr}$) traversant l'élément de commutation (Tr), un comparateur de niveau (7), ayant sa seconde entrée reliée à une source de tension de référence (Vr') et un circuit de commande (8) lequel est connecté à l'entrée de commande de l'élément de commutation (Tr) pour commander la durée de conduction (Tc) de celui-ci, comprenant un circuit de lissage (9) du courant traversant l'élément de commutation comportant une self de choc ($L_c$) qui est disposée en série entre la self de charge ($L_p$) et l'élément de commutation ($T_r$), et une diode ($D_1$) qui est connectée en parallèle sur cette self de choc ($L_c$) et cet élément de commutation ($T_r$), caractérisé en ce que le circuit de mesure (6) est inclus dans le circuit de roue libre de la diode ($D_1$) afin d'atténuer dans le circuit de mesure (6) les oscillations parasites causées par les éléments de fuite ($L_f$, $C_p$) de la self de charge ($L_p$).

2. Convertisseur selon la revendication 1, caractérisé en ce qu'il comprend un moyen ($D_2$) de récupération de l'énergie emmagasinée dans le self de choc ($L_c$).

3. Convertisseur selon la revendication 2, caractérisé en ce qu'il comprend un réseau série résistance-capacité qui est connecté en parallèle sur la self de choc ($L_c$).

**Patentansprüche**

1. Gleichstrom/Gleichstrom-Wandler mit einer Lastinduktivität ($L_p$), die in Reihe mit einem Schaltelement (Tr) angeschlossen ist, welches einen Steuereingang aufweist, mit einer Einrichtung zum Regeln der Größe der magnetischen Energie ($W_{lm}$), die in der Lastspule ($L_p$) gespeichert wird, wobei diese Regeleinrichtung in Reihenschaltung eine Meßschaltung (6) zur Messung des das Schaltelement (Tr) durchquerenden Stromes ($I_{Tr}$), einen Pegelkomparator (7), dessen zweiter Eingang mit einer Referenzspannungsquelle (Vr') verbunden ist, und eine Steuerschaltung (8) aufweist, die mit dem Steuereingang des Schaltelementes (Tr) verbunden ist, um die Stromführungsdauer (Tc) desselben zu steuern, mit einer Glättungsschaltung (9) zur Glättung des das Schaltelement durchquerenden Stromes, welcher eine Drosselspule ($L_c$) enthält, die in Reihe zwischen die Lastspule ($L_p$) und das Schaltelement (Tr) geschaltet ist, und einer Diode ($D_1$), die zu dieser Drosselspule ($L_c$) und diesem Schaltelement (Tr) parallel geschaltet ist, dadurch gekennzeichnet, daß die Meßschaltung (6) in dem Freilaufkreis der Diode ($D_1$) enthalten ist, um in der Meßschaltung (6) Störschwingungen zu dämpfen, welche durch die Streuelemente ($L_f$, $C_p$) der Lastspule ($L_p$) verursacht werden.

2. Wandler nach Anspruch 1, dadurch gekennzeichnet, daß er eine Einrichtung ($D_2$) zur Rückgewinnung der in der Drosselspule ($L_c$) gespeicherten Energie umfaßt.

3. Wandler nach Anspruch 2, dadurch gekennzeichnet, daß er ein Reihennetzwerk aus Widerstand und Kapazität umfaßt, welches parallel zu der Drosselspule ($L_c$) geschaltet ist.

**Claims**

1. Direct-direct converter comprising a load inductance ($L_p$) connected in series with a switching element (Tr) having a control input, comprising means for controlling the value of the magnetic energy ($W_{lm}$) stored in the load choke ($L_p$), these control means comprising, connected in series, a circuit (6) for measuring the current ($I_{Tr}$) crossing the switching element (Tr), a level comparator (7) having its second input connected to a reference voltage source (Vr') and a control circuit (8) which is connected to the control input of the switching element (Tr) to control the duration of conduction (Tc) of the latter, comprising a circuit (9) for smoothing the current crossing the switching element comprising a choke coil ($L_c$) which is connected in series between the load choke ($L_p$) and the switching element (Tr), and a diode ($D_1$) connected in parallel onto said choke coil ($L_c$) and this switching element ($T_r$), characterized in that said measuring circuit (6) is included in the free wheeling circuit of the diode ($D_1$) in order to attenuate within the measuring circuit (6) the parasitic oscillations caused by the parasitic elements ($L_f$, $C_p$) of the load choke ($L_p$).

2. Converter according to claim 1, characterized in that it comprises a means ($D_2$) for recovering the energy stored in the choke coil ($L_c$).

3. Converter according to claim 2, characterized in that it comprises a series resistor-capacity network which is connected in parallel to the choke coil ($L_c$).

FIG_1

# FIG_2-a

# FIG_2-b

# FIG_3-a

# FIG_3-b

3

# FIG_4

# FIG_5

# FIG_6

# FIG_7